Europäisches Patentamt

**European Patent Office**

Office européen des brevets

(11) Publication number: **0 119 783**
A2

# EUROPEAN PATENT APPLICATION

(21) Application number: **84301458.0**

(22) Date of filing: **06.03.84**

(51) Int. Cl.³: **A 01 K 9/00**

(30) Priority: **18.03.83 IE 588/83**

(43) Date of publication of application: **26.09.84**
**Bulletin 84/39**

(84) Designated Contracting States: **AT BE CH DE FR GB IT LI LU NL SE**

(71) Applicant: **McAuliffe, Joseph Patrick, Pike Cross Ballyhea, Charleville (Rath Luirc) County Cork (IE)**

(72) Inventor: **McAuliffe, Joseph Patrick, Pike Cross Ballyhea, Charleville (Rath Luirc) County Cork (IE)**

(74) Representative: **Walter, Douglas Ernest et al, HASELTINE LAKE & CO. 28, Southampton Buildings, London WC2A 1AT (GB)**

(54) **Animal feeding apparatus.**

(57) An apparatus for the ad lib. feeding of young animals comprises a container (2) for receiving liquid feed from a reservoir (20), and a heater (27) located externally of but adjacent to the container for heating the liquid feed in the container. A temperature probe (18) controls the heater to heat the liquid feed to a given temperature. At least one outlet (11) is provided for dispensing the liquid feed to the animals in response to a sucking action on a teat (40). Valve means (26) control the flow of liquid feed from the reservoir into the container, and upper and lower level sensors (32, 33) responsive to the level of liquid feed in the container cause the valve means (26) to open to replenish the feed when the latter drops below the lower sensor (33), the valve means being turned off when the level reaches the upper sensor (33).

0119783

## ANIMAL FEEDING APPARATUS

This invention relates to apparatus for the ad lib. liquid feeding of young animals, particularly young domesticated mammals, and especially calves, lambs, foals and piglets.

Conventional automatic feeding apparatus for the ad lib. feeding of young animals are generally fairly complicated, one such example being the Legrain automatic feeder. Such apparatus has conventionally been used with powdered milk and milk substitutes which are mixed with warm water and dispensed from the machine on demand for immediate consumption by young animals. Milk and milk substitutes are not suitable for making up in bulk because in the liquid state they provide a perfect medium for bacterial growth. Automatic feeders in general require the use of a particular type of powder, for example, a free-flowing powder.

A recent development has been the introduction of acid milk replacers which include various organic acids and salts thereof or mixtures of such acids and salts which prevent or retard bacterial contamination. Such acid milk replacers remain in suspension and thus can be made up in bulk, for example, 300 gallons at a time. Feeding acid milk replacers has been found to reduce the incidence of scours in calves and to reduce the rate of calf mortality. Acid milk replacers are designed for cold feeding and the feeding temperature frequently recommended is 12-20°C. Cold ad lib. feeding as practiced by the majority of farmers involves mixing the powder with cold water and the mixture is then made available for ad lib. feeding by young animals. Frequently the cold feed is made up in a bucket. However, cold feeds are also made up in bulk so as to provide sufficient feed for 2-3 days. Although there may have been some use of acid milk replacers in automatic feeders of the type discussed above, this use has not been wide-spread, since such apparatus is generally adapted for use with powdered milk and milk substitutes intended for immediate consumption on reconstitution.

Recent research has shown that cold feeding has some significant disadvantages. For example, cold feeding has been found to predispose calves to stress which can affect both health and performance. Shivering is frequently observed in young calves on cold ad lib. feeding which has a debilitating effect. The palatability of cold feeds is also considered to be a limiting factor in achieving maximum intake of feed to optimize daily weight gain.

It will be appreciated that the term "cold" in relation to cold feeding is a relative term. In the winter "cold" can be as cold as 4°C or colder. Another objection raised by veterinary surgeons and animal health inspectors in relation to cold feeding is that when the feeding temperature is too low, there is a corresponding risk of 'undercooling' and stomach inflammation.

Calves also have a natural urge to suck. Positive physiological advantages accrue from the sucking act. Sucking aids salivation and increases the secretion of pre-gastric esterase which helps to reduce the risk of digestive disorders.

0119783

It is an object of the present invention to provide apparatus for the _ad lib._ feeding of a liquid feed to young animals which mitigates the aforementioned disadvantages, is of relatively simple construction and is suitable for use with so-called acid milk replacers.

Accordingly, the invention provides an apparatus for the _ad lib._ feeding of young animals comprising a container for receiving liquid feed from a reservoir, a heater located externally of but adjacent to the container for heating the liquid feed in the container, means for controlling the heater to heat the liquid feed to a given temperature, at least one outlet for dispensing the liquid feed to the animals in response to a sucking action, valve means for controlling the flow of liquid feed from the reservoir into the container, and valve control means responsive to the level of liquid feed in the container to cause the valve means to replenish the feed when the latter drops below a given level.

Preferably, the liquid feed is milk, colostrum, a milk substitute or acid milk replacer as hereinabove described. The apparatus is especially suitable for use with an acid milk replacer.

The container is preferably constructed from stainless steel which is resistant to attack by edible organic acids or their salts of the type used as a preservative in conventional acid milk replacers.

The heating means may comprise an infra-red heating device positioned below the base of the container and which provides a uni-directional source of heat to said container, or an electric element.

The temperature of the liquid feed is preferably controlled by a conventional thermostat responsive to a temperature sensitive probe located within the container.

The apparatus is especially suitable for the ad lib. feeding of calves, for which the preferred temperature of the liquid feed is in the range 30-37°C.

Preferably, the or each outlet is adapted for receiving one end of a flexible conduit, the other end of said conduit receiving a teat device through which the animal feeds.

The heating means is preferably located in a housing which may serve the dual function of providing a support system for the container and increasing the stability of the apparatus. Further, preferably, the container and the housing are of an integral construction.

The container and/or the housing may be lagged to minimise heat loss to the environment.

Means may also be provided for reducing the current flowing through the heat source so as to prevent possible over-heating and 'cooking' of the liquid feed during periods when the demand for feed is likely to be low, especially during the hours of darkness. Such means may comprise a conventional voltage reduction switch operatively connected to the heating device.

The invention will be understood from the following description of two embodiments thereof given by way of example only with reference to the accompanying drawings in which:

Figure 1 is a schematic representation of a first embodiment of apparatus according to the invention, and

Figure 2 is a schematic representation of a second embodiment of apparatus according to the invention.

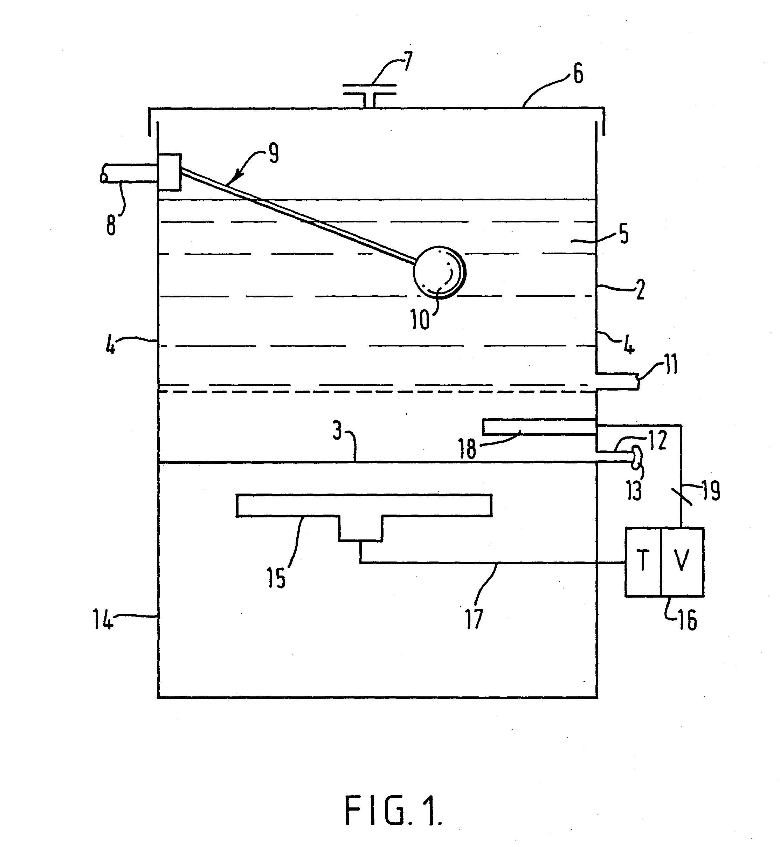

Referring to figure 1 of the drawings, apparatus for the ad lib. feeding of young animals such as calves includes a stainless steel container 2 having a base 3 and sidewalls 4. In use, the container 2 receives a pre-determined quantity of a liquid feed 5 in the form of an acid milk replacer. The stainless steel container 2 is resistant to attack by the acid milk replacer 5.

The container is provided with a lid 6 having a handle 7, which lid reduces condensation and the likelihood of contamination of the liquid feed 5 by extraneous matter.

The liquid feed 5 is fed to the container 2 from a reservoir (not shown) by a conduit 8 and enters the container 2 in controlled manner through the action of a conventional float-operated valve or ball-cock, indicated generally at 9, and having a float 10. The ball-cock 9 and float 10 are comprised of acid-resistant components.

The container 2 is provided with two dispensing outlets 11 at the same level located in one sidewall 4 of the container. Only one of the outlets 11 is seen in the drawing.

A drainage outlet 12, fitted with a plug 13, is provided below the dispensing outlets 11 and a minimum level of liquid 5, indicated by the dotted line, is always present in the container 2 when it is in use, for a purpose hereinafter described.

Each of said dispensing outlets 11 is connected via a flexible conduit (not shown) to a conventional feeding teat (not shown) at a locus remote from the container 2.

The container 2 is mounted on and integral with a rigid structure 14 which houses an infra-red heating lamp 15. The lamp 15 heats the liquid feed 5 substantially uniformly through the base 3 of the container 2, the base 3 consisting of a thin sheet of stainless steel approximately 1.5 mm. in thickness.

The infra-red lamp 15 provides a substantially uni-directional (upward) source of heat for heating the liquid feed 5 so that heat loss to the environment is minimised.

A power supply and control unit 16, in use, supplies current to the lamp 15 _via_ lead 17. A temperature sensitive probe 18, responsive to the temperature of the liquid feed 5 and associated with a conventional cut-out device in the unit 16, is located in the container 2 below the minimum liquid level. Accordingly, the probe 18 is covered at all times by the liquid feed 5 and, in particular, in the event of failure of the valve mechanism 9 or failure in the supply of liquid feed 5 to the container 2.

The desired temperature of the liquid feed 5 is set by means of a temperature control T associated with the unit 16, the preferred temperature being close to body temperature _viz_ 37°C.

The temperature sensitive probe 18, in use, supplies a temperature-dependent voltage signal in conventional manner _via_ lead 19 to the unit 16, and if the temperature of the liquid feed 5 falls significantly below the set temperature the lamp 15 is switched on by the unit 16 until the set temperature of the feed 5 is restored.

A voltage reduction switch V associated with the unit 16 allows for adjustment and reduction of the rate of heating of the feed 5 if required, such as during the hours of darkness, since young animals do not generally feed during the hours of darkness. The maximum residence time of the feed 5 in the container according to the normal feeding pattern of calves would be at most 16 hours, but generally not more than 8 hours. The apparatus also includes means (not shown) for turning off the heating lamp 15 if the float 10 falls below the minimum level for any reason.

0119783

In use, with the maximum level of liquid in the container 2, as the calves feed from the teats the level of liquid 5 in the container 2 drops. When the level of liquid 5 drops from this maximum the valve mechanism 9 admits a replenishing quantity of the liquid 5 and the valve closes when the float 10 again reaches the maximum level.

When it is desired to clean the container 2, the plug 13 is removed, residual feed 5 is drained through the drainage outlet 12 and then the container 2 is thoroughly cleansed by flushing out with water and optionally with a disinfectant such as an iodophor.

In the above apparatus the heating of the liquid feed is indirect, i.e., across a partition, so that localized burning or 'cooking' of the feed is avoided. The mechanical valve mechanism ensures that there is no overflow or, conversely, drying out of the container wherein the liquid feed is heated. It will be appreciated that the apparatus includes few movable components and hence requires a minimum of mechanical maintenance. The apparatus can be used with all conventional liquid feeds for young animals, but especially acid milk replacers.

In the event of power failure, the apparatus can be used for cold ad lib. feeding of liquid feeds.

Young animals can be fed at selected temperatures depending upon the ambient temperature and/or environmental conditions. This ensures that stress is minimised with consequent benefit to the general performance and overall health of the animals. Furthermore, an adequate feed intake can be ensured for maximum daily weight gain.

Animal intake of feed can be restricted if required by adjustment of the feed temperature or reduction of the flow rate for specific time feeding intervals. This feature can be used for controlling feed intake for calves under veterinary supervision on restricted feeding and is particularly important when calves are being encouraged to eat dry solid food and at weaning-off from liquid feeding.

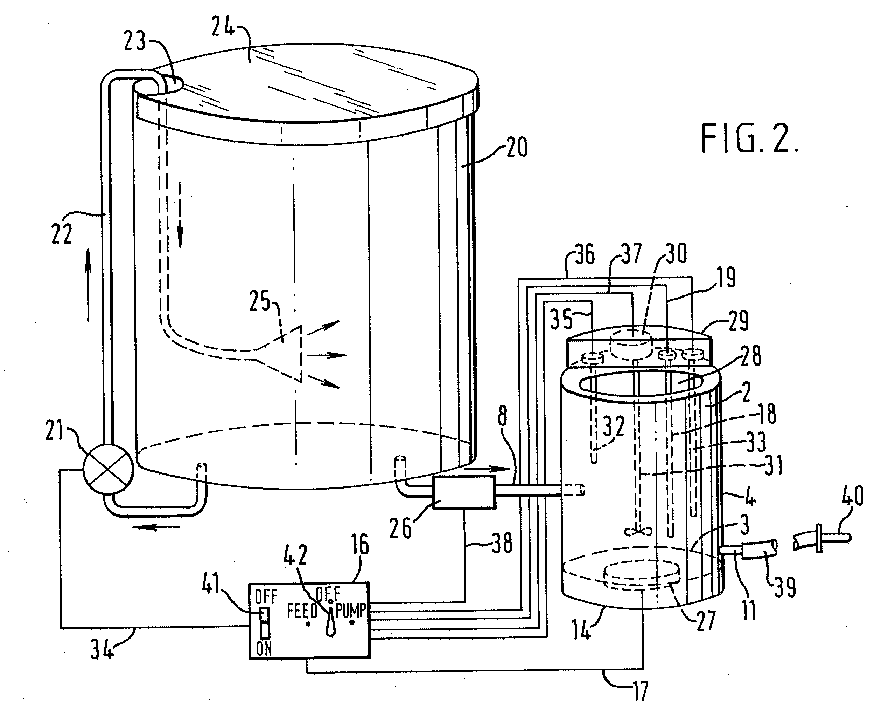

Referring now to figure 2, the second embodiment of apparatus according to the invention illustrated therein incorporates many components which are the same or similar to corresponding components in figure 1, and these have therefore been given the same reference numerals to avoid duplication. Furthermore, as in the figure 1 apparatus, the materials which come into contact with the liquid feed are such as to be resistant to attack by the liquid feed, and stainless steel is used where possible, especially for the heating container 2 and bulk reservoir. Finally it is to be understood that for clarity figure 2 shows only the main functional parts of the apparatus, and that these are mounted on a rigid support structure which is not shown.

The apparatus of figure 2 includes a bulk reservoir 20, typically 270 litres capacity, which is used to mix the liquid feed prior to supply to the heating container 2. Such mixing is effected by a pump 21 which can pump the liquid feed from the bottom of the reservoir back into the top via an external pipe 22. The pipe 22 enters the top of the tank through an aperture 23 in a removable lid 24, and terminates in a spray nozzle 25 to improve the mixing action. This efficiently mixes the feed, which is made up from dry powder and water, and prevents sediment accumulating on the bottom of the reservoir 20. As will be described, the pump 21 and indeed the entire apparatus is controlled by a microprocessor in the power supply and control unit 16.

The container 2, typically 16 litres capacity, receives the mixed liquid feed from the reservoir 20 via the pipe 8 which includes a solenoid-operated valve 26. The container 2 incorporates a heater 27 immediately below or affixed to the underside of its base 3, except that in this case the heater is an electric heater element, similar to the type used in domestic cookers, encased in ceramic. The top of the container 2 has an opening 28 to permit cleaning, the opening normally being closed by a lid (not shown). To one side of the opening 28 the top of the container 2 has a housing 29 which accommodates a motor 30 for a mixer or agitator 31. The agitator 31 prevents any local burning of the feed when the heater 27 is on.

Also extending downwardly from the housing 29 are upper and lower liquid level sensors 32 and 33. Each is in the form of a hollow stainless steel tube containing at the bottom a pair of spaced terminals which will permit a small current to pass across them when they are bridged by liquid but which are otherwise isolated from one another. The unit 16 can sense this small current and therefore determine when the liquid level in the container 2 is at the bottom of the upper and lower sensors 32 and 33 respectively. As will be described, this is used to control the valve 26 in such manner that the valve is opened when the liquid feed level falls to the bottom of the lower sensor 33 and closed when the liquid feed level rises to the bottom of the upper sensor 32, thereby maintaining the liquid feed between these two levels.

The container also has a temperature probe 18 which extends down below the level of the lower level sensor 33, so that its temperature sensitive tip is always below the level of the liquid feed. As in the case of the first embodiment, this probe controls the heating of the liquid feed. In the present case the microprocessor in the unit 16 senses the temperature of the liquid feed as determined by the probe 18 and switches the heater 27 on when the temperature falls to $32^{o}C$ and off when the temperature reaches $35^{o}C$,

thereby maintaining the temperature between these two limits.

Finally, the container has one or more outlets 11 for the liquid feed, these being connected by flexible tubing 39 to a conventional teat 40 incorporating a non-return valve.

The power supply and control unit 18 is connected to the pump 21 by lead 34, to the heater 27 by lead 17, to the temperature probe 18 by lead 19, to the upper and lower sensors 32 and 33 by leads 34 and 36 respectively, to the motor 30 by lead 37, and to the valve 26 by lead 38. The unit 16 further has an on/off heater switch 41 and a three-position mode selector switch 42. For the three-position switch 42 the centre position is OFF, the right hand position (PUMP) turns on the pump 21 only, and the left hand position (FEED) puts the apparatus into automatic mode as will be described. The heater switch 41 controls the heater, in conjunction with the switch 42. When the heater switch 41 is OFF no heating can occur; when the switch is ON the heating is determined by the automatic mode of the apparatus.

The apparatus is operated as follows. Initially, the correct proportions of water and dry acid milk replacer are placed in the reservoir 20, and the switch 42 is turned to the PUMP setting. This runs the pump 21 to mix the liquid feed. When mixing is complete the switch 42 is turned to the FEED setting whereupon the following events occur:

1.  The pump 21 mixes again for twenty seconds.
2.  The solenoid valve 26 opens and the container 2 begins to fill.
3.  When the liquid feed reacheds the lower sensor 33 the agitator 31 comes on, and the heater 27 also comes on provided the heater switch 41 is in the ON position.

4.  When the feed reaches the upper sensor 32, the solenoid valve 26 closes. The heater 27 and the agitator 31 stay on.

5.  When the feed reaches temperature ($35^{\circ}C$), the heater 27 switches off. The agitator 31 keeps going for one minute longer to guard against localized burning.
    Now the calves can be fed.

6.  When feed is drawn off, and the lower sensor 33 is uncovered, the pump 21 comes on for 30 seconds, and then the solenoid valve 26 opens. The valve 26 closes again when upper sensor 32 is reached.

7.  The agitator 31 comes on intermittently for one minute in every 5 minutes. The agitator 31 is always on when heater 27 is on.

8.  When the reservoir 20 is empty and the upper sensor 32 cannot be reached because of lack of feed, the solenoid valve 26 stays open for approximately 5 or 6 minutes and then closes down. When the lower sensor 33 is uncovered in this situation the pump 21 comes on. The solenoid valve 26 opens again for 10 minutes and then closes down. The heater 27 is turned off, the agitator 31 is turned off, and the pump 21 is turned off.

This particular control cycle is relatively simple and I believe that it is well within the capabilities of one skilled in the art to implement a micro-processor based system to perform such control. For example, the type of control is simliar to that used in microprocessor-controlled domestic washing machines. I therefore think it unnecessary to include details of a suitable control program in the present specification.

CLAIMS:-

1.      An apparatus for the <u>ad lib.</u> feeding of young animals, characterised by a container (2) for receiving liquid feed from a reservoir (20), a heater (27) located externally of but adjacent to the container for heating the liquid feed in the container, means (18) for controlling the heater to heat the liquid feed to a given temperature, at least one outlet (11) for dispensing the liquid feed to the animals in response to a sucking action, valve means (26) for controlling the flow of liquid feed from the reservoir into the container, and valve control means (32,33) responsive to the level of liquid feed in the container to cause the valve means (26) to replenish the feed when the latter drops below a given level.

2..     An apparatus according to claim 1, wherein the heater (27) is disposed adjacent the base (3) of the container.

3.      An apparatus according to claim 1 or 2, wherein the container (2) includes means (31) for agitating the liquid feed while heating.

4.      An apparatus according to claim 1, 2 or 3, wherein the container (2) includes upper and lower liquid feed level sensors (32,33), the valve means (26) being responsive to the sensors to open when the level drops below the lower sensor and to close when the level reaches the upper sensor.

5.      An apparatus according to any preceding claim, wherein the heater (27) is controlled by a temperature sensitive element (18) inside the container (2).

6.     An apparatus according to any preceding claim, wherein the reservoir (20) includes a pump (21) for circulating liquid feed via an external pipe (22) to mix the contents of the reservoir.

FIG.1.

FIG. 2.

0119783